# FASCICULE DE BREVET EUROPEEN

(11) **EP 1 074 291 B1**
(45) Date de publication et mention de la délivrance du brevet: **02.11.2005**
(21) Numéro de dépôt: 00420171.1
(22) Date de dépôt: 02.08.2000
(51) Int. Cl.: B01D 63/06, B01D 69/02, B01D 71/02

(54) **Membrane pour filtration tangentielle et son procédé de fabrication**
Querstromfiltrationsmembran und Verfahren zu ihrer Herstellung
Cross-flow filtration membrane and method for manufacturing the same

(30) Priorité: 04.08.1999 FR 9910294
(43) Date de publication de la demande: 07.02.2001
(73) Titulaire: Technologies Avancees & Membranes Industrielles S.A., 26110 Nyons (FR)
(72) Inventeur: Grangeon, André, 84600 Valreas (FR); Lescoche, Philippe, 84110 Faucon (FR); Fleischmann, Thomas, 07646 Quirla (DE); Ruschel, Bernd, 07629 St Gangloff (DE)
(74) Mandataire: Thibault, Jean-Marc

(56) Documents cités:
- EP-A- 0 225 402
- EP-A- 0 617 199
- EP-A- 0 686 424
- EP-A- 0 870 534
- US-A- 4 390 355
- US-A- 4 423 090
- PATENT ABSTRACTS OF JAPAN vol. 1997, no. 02, 28 février 1997 (1997-02-28) -& JP 08 266837 A (AMANO CORP), 15 octobre 1996 (1996-10-15) -& DATABASE WPI Section Ch, Derwent Publications Ltd., London, GB; Class J01, AN 1996-513152 XP002138159

## Description

La présente invention concerne le domaine technique de la séparation moléculaire ou particulaire mettant en oeuvre des éléments de séparation appelés généralement membranes réalisées à partir de matériaux inorganiques et constituées d'un support poreux rigide comportant au moins un canal de circulation d'un milieu fluide, sur la surface duquel est déposée au moins une couche séparatrice dont la nature et la morphologie sont adaptées pour assurer la séparation des molécules ou des particules contenues dans le milieu fluide à traiter.

L'objet de l'invention vise, plus précisément, la réalisation des couches de séparation faisant partie des membranes inorganiques.

L'objet de l'invention trouve une application particulièrement avantageuse dans le domaine de la nanofiltration, l'ultrafiltration, la microfiltration, la filtration ou l'osmose inverse.

D'une manière classique, une membrane se définit par l'association d'un support poreux en matière inorganique, telle qu'en céramique, et d'une ou plusieurs couches séparatrices en matière inorganique déposées sur la surface de chaque canal de circulation et liées entre elles et au support, par frittage. Le rôle des couches est d'assurer la séparation des espèces moléculaires ou particulaires tandis que le rôle du support est de permettre, par sa résistance mécanique, la réalisation de couches de faible épaisseur. Ainsi, le support permet d'assurer la résistance mécanique sans participer à la résistance hydraulique de la membrane, tandis que la couche de séparation définit la perméabilité sans participer à la résistance mécanique.

Dans l'état de la technique, il est connu de nombreuses membranes réalisées à partir d'éléments de filtration à caractère tubulaire ou plan. Dans le domaine des membranes tubulaires, le support poreux rigide est de forme allongée en présentant une section transversale droite polygonale ou circulaire. Le support poreux est aménagé pour comporter au moins un et de préférence une série, de canaux parallèles entre eux et à l'axe longitudinal du support poreux, en présentant chacun une forme cylindrique. Les canaux communiquent, d'un côté, avec une chambre d'entrée pour le milieu fluide à traiter et, de l'autre côté, avec une chambre de sortie. La surface des canaux est recouverte d'au moins une couche séparatrice assurant la séparation des molécules ou des particules contenues dans le milieu fluide circulant à l'intérieur des canaux, selon un sens donné, d'une extrémité à l'autre des canaux. Une telle membrane réalise, par effet tamis, une séparation des espèces moléculaires ou particulaires du produit à traiter, dans la mesure où toutes les particules ou molécules supérieures au diamètre des pores de la membrane sont arrêtées. Durant la séparation, le transfert du fluide s'effectue à travers la couche séparatrice, puis le fluide se répand dans la porosité du support pour se diriger vers la surface extérieure du support poreux. La partie du fluide à traiter ayant traversé la couche de séparation et le support poreux est appelée perméat et se trouve récupérée par une chambre de collecte entourant la membrane.

Dans le domaine technique des membranes à caractère plan, le support poreux se présente sous la forme d'un bloc dans lequel est aménagé au moins un, et en général une série de canaux superposés présentant chacun une section droite transversale polygonale généralement rectangulaire. La surface des canaux est recouverte d'au moins une couche séparatrice.

Suivant le principe de la filtration tangentielle, le fluide à traiter circule à grande vitesse sur la surface des canaux afin de générer une contrainte de cisaillement qui redisperse les matières déposées sur cette surface. Il apparaît ainsi un frottement du fluide sur la surface des canaux conduisant à l'existence d'une perte de charge qui varie linéairement en fonction de la longueur des canaux. Cette perte de charge dépend de paramètres dimensionnels tels que la longueur de la membrane, de son diamètre hydraulique et de paramètres expérimentaux, tels que la vitesse de circulation, la viscosité et la masse volumique du fluide à traiter.

Comme la force agissante de la filtration est une pression, il apparaît une variation décroissante de la pression du fluide à traiter le long des canaux. Un tel gradient de pression modifie l'écoulement transversal du perméat qui traverse la couche séparatrice, puis le corps poreux. Le débit du perméat est donc variable le long de la membrane. Ce gradient du débit du perméat conduit à une hétérogénéité de la séparation réalisée par la membrane faisant apparaître des régimes de séparation différents le long des canaux.

Pour tenter de remédier à ses inconvénients, le brevet **US 4 105 547** décrit un appareil de filtration tangentielle mettant en oeuvre un système de compensation de la perte de charge longitudinale. Un tel système consiste à assurer la circulation du perméat tangentiellement à l'extérieur de la membrane, dans le même sens que le fluide à traiter circulant tangentiellement dans les canaux. La perte de charge de l'écoulement du perméat est identique à celle du fluide à traiter. Il apparaît donc une compensation entre les deux pertes de charge, de sorte que la pression est la même en tout point le long des canaux.

Un tel appareil présente l'inconvénient de nécessiter la mise en oeuvre d'une boucle de recirculation du perméat, ce qui complique considérablement la fabrication de tels appareils et accroît le coût énergétique lié au fonctionnement de cette boucle supplémentaire.

Pour remédier à ces inconvénients, la demande de brevet **EP 0 870 534** propose un support macroporeux dont la porosité externe est modifiée, de manière à faire apparaître un gradient de porosité tout le long de ce support. Ce gradient de porosité fait apparaître un gradient de perméabilité. En raison de la variation de la pression, le flux de perméat qui traverse la membrane devient constant. Si une telle solution permet de modifier uniquement le support, cette technique présente l'inconvénient de réduire la porosité externe du support facilitant ainsi l'accumulation des molécules ou des particules qui ont traversé la couche séparatrice et qui, statistiquement, peuvent être arrêtées par la partie du support à porosité réduite. Pratiquement, le diamètre des pores suivant une section droite transversale d'un tel support augmente puis diminue à sa périphérie, de sorte qu'il apparaît un risque d'accumulation pour les molécules ou particules. Une telle accumulation est susceptible de conduire à la destruction du support. Par ailleurs, la réduction de la porosité est effectuée uniquement sur la couronne externe du support poreux. Ainsi, la porosité du support, dans sa partie interne, n'est pas réduite. Aussi, durant l'opération de séparation, la pression à l'intérieur des canaux décroît selon le sens d'écoulement du fluide à traiter. Le perméat, après avoir traversé la couche séparatrice, se répand dans la porosité interne et s'écoule vers l'extérieur en recherchant une zone nécessitant moins d'énergie. Le perméat s'écoule alors principalement par la partie du support la plus poreuse. Dans ces conditions, le gradient de porosité ainsi réalisé conduit à l'apparition de flux de perméat hétérogènes suivant la longueur de la membrane.

Il est connu par ailleurs, que le brevet USA 4423 090, décrit un élément de filtration pour les gaz comportant une série de canaux d'entrée des gaz, s'ouvrant sur une première face principale de l'élément et une série de canaux de sortie des gaz s'ouvrant sur une seconde face de l'élément opposée à la première. Les canaux d'entrée et de sortie délimitent entre eux des parois dont l'épaisseur augmente de l'entrée à la sortie de l'élément de manière que la section des canaux d'entrée diminue de l'entrée à la sortie. Les particules des gaz sont ainsi piégées de façon uniforme sur toute la longueur des canaux.

L'objet de l'invention vise donc à remédier aux inconvénients énoncés ci-dessus en proposant une membrane de filtration tangentielle, adaptée pour obtenir un flux de perméat sensiblement identique le long de la membrane et ne présentant pas de zone fragile où s'accumulent des espèces du fluide à traiter, retenues par la membrane.

Pour atteindre un tel objectif, la membrane selon l'invention comporte un support poreux rigide inorganique délimitant au moins un canal de circulation pour le fluide à traiter, circulant dans un sens donné, la surface du canal étant recouverte par au moins une couche de séparation du fluide à traiter. Selon l'invention, la couche de séparation comporte un gradient d'épaisseur diminuant selon le sens de circulation du fluide à traiter.

L'objet de l'invention vise également à proposer un procédé de réalisation d'une membrane pour filtration tangentielle d'un fluide à traiter. Conformément à l'invention, un tel procédé consiste à recouvrir la surface du canal par au moins une couche de séparation présentant un gradient d'épaisseur diminuant selon le sens de circulation du fluide à traiter.

Diverses autres caractéristiques ressortent de la description faite ci-dessous en référence aux dessins annexés qui montrent, à titre d'exemples non limitatifs, des formes de réalisation et de mise en oeuvre de l'objet de l'invention
La **fig. 1** est une vue en coupe transversale d'un exemple de réalisation d'une membrane conforme à l'invention.
La **fig. 2** est une vue en coupe longitudinale d'une membrane prise sensiblement selon les lignes II-II de la **fig. 1**.
La **fig. 3** est une vue en coupe longitudinale d'un autre exemple de réalisation d'une membrane conforme à l'invention.
Les **fig. 4 et 5** sont des tableaux donnant les mesures expérimentales, respectivement, pour une membrane de l'art antérieur et pour une membrane conforme à l'invention.

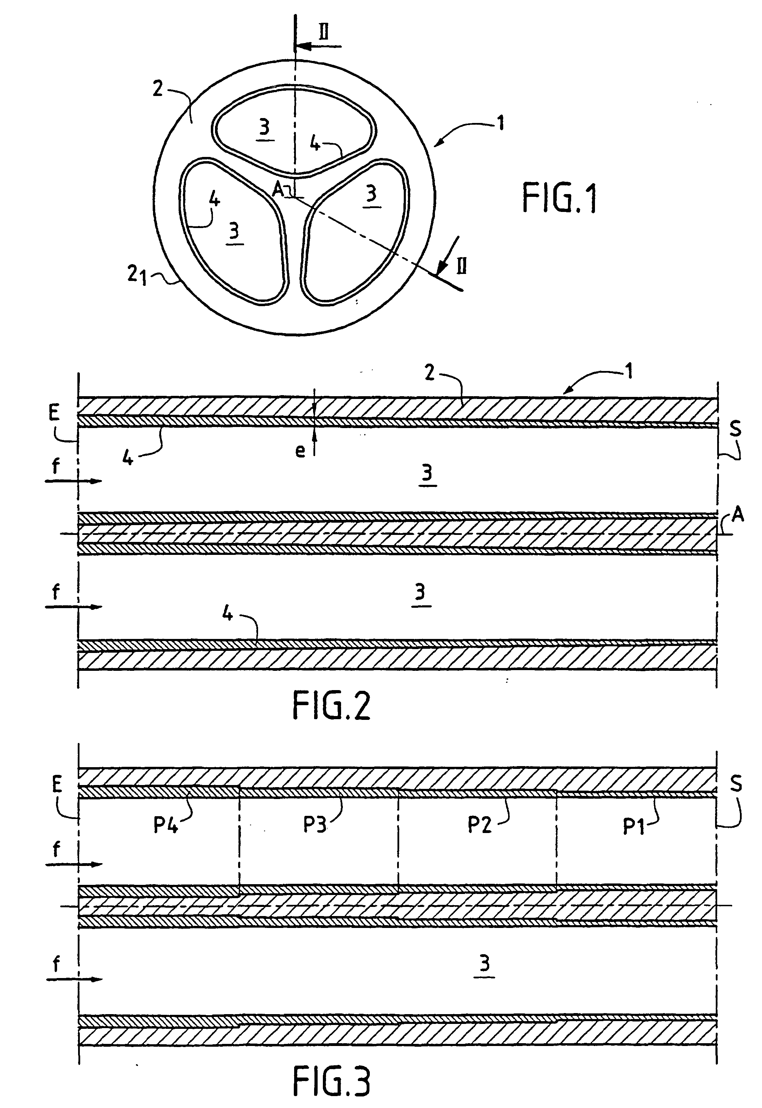

Tel que cela ressort des **fig. 1** et **2**, la membrane de filtration **1** conforme à l'invention est adaptée pour assurer la séparation ou la filtration de molécules ou de particules contenues dans un milieu fluide, de préférence liquide, de natures diverses, comportant une phase solide ou non. Dans l'exemple de réalisation illustré, la membrane de filtration **1** est de type tubulaire. Selon cet exemple, la membrane de filtration **1** comporte un support poreux **2** rigide inorganique, constitué dans une matière dont la résistance au transfert est adaptée à la séparation à effectuer. Le support poreux **2** est réalisé à partir de matériaux inorganiques, tels que des oxydes métalliques, du carbone ou des métaux. Dans cet exemple de réalisation, le support poreux **2** est réalisé sous une forme allongée s'étendant selon un axe central longitudinal **A**. Le support poreux **2** possède une section droite transversale polygonale ou, comme dans l'exemple illustré aux **fig. 1** et **2**, une section transversale circulaire. Le support poreux **2** présente ainsi une surface extérieure **2**_{**1**} cylindrique de section circulaire.

Le support poreux **2** est aménagé pour comporter au moins un et, dans l'exemple illustré, trois canaux **3** réalisés parallèlement à l'axe **A** du support. Les canaux **3** présentent chacun une surface recouverte par au moins une couche séparatrice **4**, destinée à être en contact avec le milieu fluide à traiter, circulant à l'intérieur des canaux **3** selon un sens de circulation représenté par les flèches **f** permettant de délimiter une entrée **E** et une sortie **S** pour une telle membrane. La nature de la ou des couches séparatrices **4** est choisie en fonction du pouvoir de séparation ou de filtration à obtenir et forme, avec le support poreux **2**, une liaison intime de façon que la pression provenant du milieu liquide soit transmise au support poreux **2**. Cette ou ces couches peuvent être déposées à partir, par exemple, de suspensions contenant au moins un oxyde métallique et classiquement utilisé dans la production des éléments de filtration minéraux. Cette ou ces couches sont soumises après séchage à une opération de frittage qui permet de les consolider et de les lier entre elles ainsi qu'au support poreux **2**. Une partie du milieu fluide traverse la couche séparatrice **4** et le support poreux **2**, de sorte que cette partie traitée du fluide, appelée perméat, s'écoule par la surface extérieure **2**_{**1**} du support poreux.

Conformément à l'invention, la couche de séparation **4** comporte une épaisseur **e** présentant un gradient diminuant selon le sens **f** de circulation du fluide à traiter. Ainsi, la partie la plus épaisse de la couche **4** est présente à l'entrée **E** de la membrane, tandis que la partie la plus fine de la couche **4** est située à la sortie **S** de la membrane. Ainsi, pour une couche de séparation **4**, dont la perméabilité est constante quelle que soit l'épaisseur de la couche **4**, le flux de perméat traversant cette couche **4** et le support poreux **2** est constant le long de la membrane, dans la mesure où l'épaisseur **e** de cette couche **4** varie de manière proportionnelle à la pression. En effet, la pression du fluide à traiter présente un gradient qui diminue selon le sens de circulation **f** du fluide, à savoir de l'entrée **E** jusqu'à la sortie **S** de la membrane. Le gradient d'épaisseur de la couche est donc choisi de manière à obtenir un débit de perméat constant sur toute la longueur de la membrane.

Tel que cela ressort plus précisément de l'exemple illustré à la **fig. 2,** la couche de séparation **4** présente un gradient d'épaisseur diminuant sensiblement de manière continue, selon le sens de circulation **f** du fluide à traiter. Il est à noter que sur les figures, le rapport dimensionnel entre la couche de séparation **4** et le support poreux **2** n'est pas respecté, mais la couche de séparation **4** a été représentée à plus grande échelle afin d'illustrer l'objet de l'invention.

Dans un autre exemple de réalisation illustré à la **fig. 3**, la couche de séparation **4** présente un gradient d'épaisseur diminuant par des paliers **P**_{**i**} selon le sens **f** de circulation du fluide à traiter. Dans l'exemple de réalisation illustré, la couche de séparation **4** présente quatre paliers **P**_{**1**} à **P**_{**4**} dont l'épaisseur de chacun diminue selon le sens de circulation du fluide à traiter. De préférence, les paliers **P**_{**1**} à **P**_{**4**} de la couche de séparation **4** présentent tous une longueur prise selon le sens de circulation, sensiblement identique. Dans l'exemple illustré, la couche **4** possède une épaisseur sensiblement constante le long de chaque palier **P**_{**1**} à **P**_{**4**}**.** Ainsi, l'épaisseur de la couche du palier **P**_{**4**} situé le plus proche de l'entrée **E** est supérieure à l'épaisseur de la couche du palier voisin **P**_{**3**} et ainsi de suite pour les autres paliers consécutifs. Il est à noter qu'il peut être envisagé que pour chaque palier **P**_{**1**} à **P**_{**4**}, l'épaisseur de la couche ne soit pas constante mais diminue progressivement selon le sens de circulation **f**, tandis qu'apparaît un saut d'épaisseur de la couche au niveau de la zone de jonction de deux paliers consécutifs.

Il est à noter que les exemples décrits ci-dessus concernent une membrane comportant des canaux présentant chacun une forme cylindrique de section droite transversale sensiblement ovoïde. Bien entendu, l'objet de l'invention peut être mis en oeuvre pour des membranes comportant un ou plusieurs canaux de formes variées et diverses. Dans le même sens, il est clair que l'objet de l'invention peut être appliqué à une membrane comportant au moins un canal **3** de section transversale polygonale, aménagée dans un bloc poreux afin de constituer une membrane du type plane. Dans ce type de membrane, le support poreux **2** comporte une série de canaux **3** superposés présentant chacun une section droite transversale rectangulaire et dont les parois sont recouvertes d'une couche séparatrice.

L'objet de l'invention vise également à proposer un procédé pour réaliser une membrane de filtration **1**, telle que décrite ci-dessus. La description qui suit vise un procédé pour réaliser une membrane telle qu'illustrée à la **fig. 3.** Un tel procédé consiste à diviser chaque canal **3,** en une série de tronçons **P**_{**i**} de longueur sensiblement égale, par exemple au nombre de quatre **P**_{**1**} à **P**_{**4**} dans l'exemple illustré. La surface de chaque canal **3** est ensuite recouverte par une couche séparatrice **4** en effectuant autant de dépôts qu'il y a de tronçons **P**_{**i**}. Dans l'exemple illustré, la couche **4** est obtenue par quatre dépôts successifs d'une suspension incluant différents composants se présentant sous la forme générale de grains. D'une manière classique et bien connue, l'épaisseur du dépôt est contrôlée par les paramètres de concentration de la suspension et du temps de contact entre la suspension et le support poreux **2**. Selon le procédé conforme à l'invention, les dépôts sont effectués sur la surface des canaux **3**, à partir de l'extrémité considérée d'entrée **E**, et en diminuant d'une longueur de tronçon pour chaque dépôt successif. Ainsi, dans l'exemple illustré de la réalisation d'une couche séparatrice **4** comportant quatre tronçons **P**_{**1**} à **P**_{**4**}**,** il est procédé à un premier dépôt d'une suspension sur les quatre tronçons **P**_{**1**} à **P**_{**4**} de la membrane. Il est ensuite effectué un deuxième dépôt sur les tronçons **P**_{**4**} à **P**_{**2**}, un troisième dépôt sur les tronçons **P**_{**4**} et **P**_{**3**} et un quatrième dépôt sur le tronçon **P**_{**4**}**.** Il est ainsi obtenu une couche de séparation **4** présentant un gradient d'épaisseur diminuant par paliers d'une extrémité **E** à l'autre **S** de la membrane.

Il est à noter que la fabrication d'une membrane selon l'invention peut être réalisée par une autre technique consistant à disposer verticalement le support poreux **2** et en remplissant les canaux **3** par une suspension de dépôt de la couche de séparation **4** à obtenir. Compte tenu de la disposition verticale du support poreux **2**, la pression dans la partie basse du support est différente de celle de la partie haute d'une valeur proportionnelle à la hauteur du support poreux **2**. Le dépôt ainsi réalisé prend un aspect dit "queue de billard", de sorte que l'épaisseur de la couche de séparation **4** augmente à partir du haut du support poreux. Il est rappelé que l'épaisseur du dépôt de la couche de séparation **4** dépend du temps de contact entre le support poreux **2** et la suspension. Aussi, il est prévu de vider les canaux **3** progressivement, en vue d'obtenir un temps de séjour pour la suspension de dépôt, à l'intérieur de ces canaux, qui augmente progressivement. Il peut ainsi être obtenu une couche de séparation **4** présentant un gradient d'épaisseur qui augmente à partir de l'extrémité haute jusqu'à l'extrémité basse du support. Une telle membrane présente une couche de séparation **4** dont le gradient d'épaisseur diminue selon le sens de circulation du fluide dont l'entrée **E** est considérée comme étant la partie basse du support et la sortie **S** la partie haute du support.

Bien entendu, la fabrication d'une membrane de filtration comportant une couche de séparation avec un gradient d'épaisseur, peut être réalisée par d'autres procédés de dépôt que ceux décrits ci-dessus. De plus, il doit être considéré que le dépôt des couches séparatrices s'effectue selon les modes opératoires classiques et bien connus dans le domaine technique, de sorte qu'aucune description supplémentaire n'est donné à ce sujet.

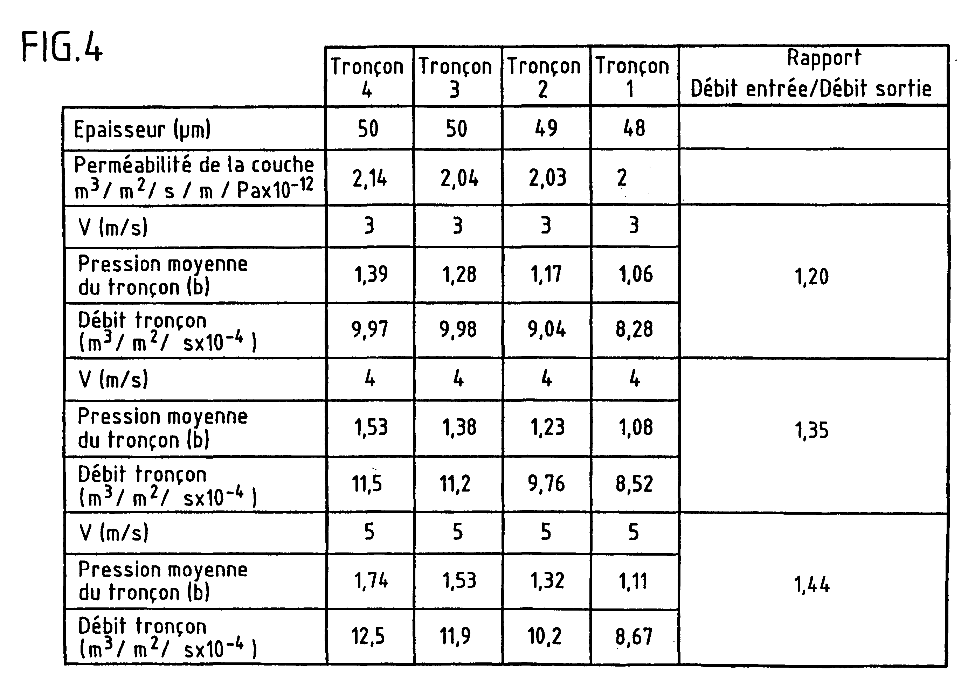

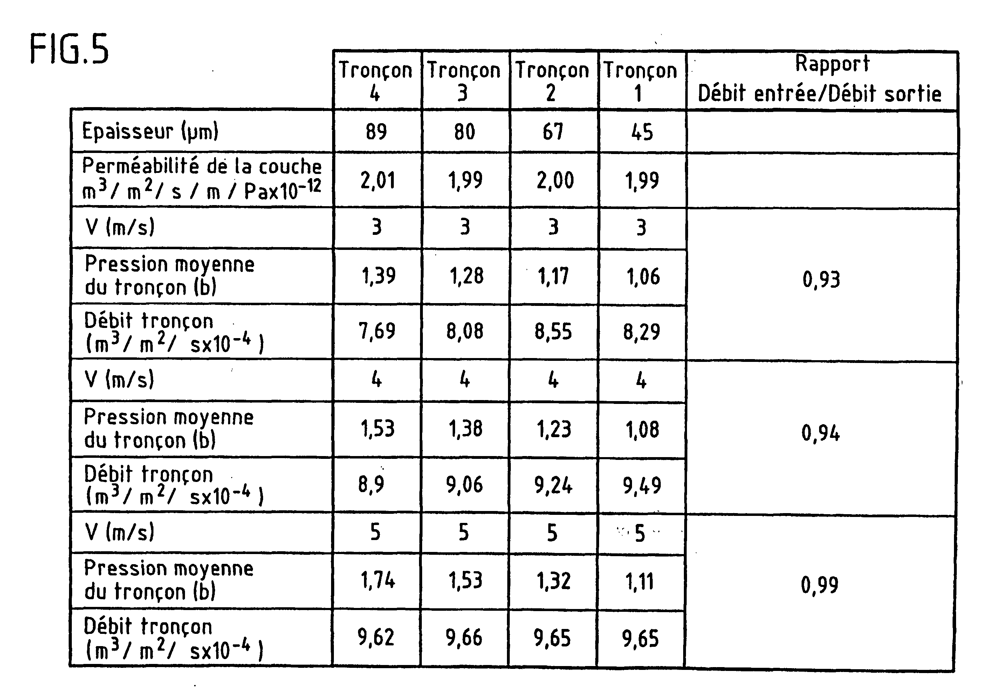

La membrane de filtration **1** selon l'invention permet d'obtenir d'une manière relativement simple et sans risque de fragilisation de la membrane, un débit de perméat constant tout le long de la membrane par la détermination d'un gradient d'épaisseur de la couche de séparation, diminuant selon le sens de circulation du fluide à traiter. Une telle caractéristique apparaît clairement en comparant les tableaux des **fig. 4** et **5**.

Pour l'expérimentation qui suit, il est utilisé un support poreux **2** mono canal de diamètre externe 10 mm, de diamètre interne 6 mm et d'une longueur de 1200 mm. Ce support poreux possède un diamètre moyen équivalent de pores de 5 µm. Sur les parois du canal, il est réalisé un dépôt d'une suspension d'oxyde de titane qui permet, après frittage, d'obtenir un diamètre moyen équivalent de ce dépôt de 1,5 µm. Pour analyser l'homogénéité du dépôt, la membrane **1** ainsi réalisée est découpée en quatre tronçons **P**_{**1**} à **P**_{**4**} de longueur égale et chaque tronçon est mesuré en perméabilité à l'eau.

Le tableau de la **fig. 4** présente, à partir de l'eau comme fluide et pour les tronçons d'une membrane conforme à l'art antérieur :
- l'épaisseur de la couche séparatrice de diamètre moyen équivalent de pores de 1,5 µm,
- et la perméabilité de la couche de séparation.

L'examen de ce tableau conduit à constater que les valeurs en épaisseur de couche et donc en perméabilité, sont relativement homogènes pour les différents tronçons de la membrane.

Le tableau de la **fig. 5** donne notamment les caractéristiques de l'épaisseur et la perméabilité de la couche séparatrice pour une membrane comportant un canal revêtu d'une couche **4**, telle que décrite en relation de la **fig. 3.** Une telle membrane selon l'invention comporte donc une couche **4** réalisée par quatre dépôts successifs faisant apparaître quatre tronçons correspondant aux paliers **P**_{**1**} à **P**_{**4**}.

La comparaison des tronçons **P**_{**1**} à **P**_{**4**} montre que l'épaisseur de la couche séparatrice **4** diminue selon le sens de circulation du fluide, c'est-à-dire selon le sens du palier **P**_{**4**} vers le palier **P**_{**1**}**.** Par ailleurs, il est à noter que la perméabilité de la couche séparatrice **4** est sensiblement constante.

Le tableau de la **fig. 5** montre aussi pour trois vitesses de circulation correspondant à trois valeurs de perte de charge, et pour chaque tronçon, la pression moyenne, le débit de perméat et le rapport entre le débit du tronçon d'entrée et le débit du tronçon de sortie, pour une membrane conforme à l'invention, telle qu'illustrée à la **fig. 3.** Il peut être constaté que l'objectif de l'invention est atteint, dans la mesure où il peut être obtenu, indépendamment de tout système mécanique, un débit sensiblement constant de perméat quel que soit l'élément de surface considéré à l'intérieur de la membrane. En effet, le rapport débit du tronçon d'entrée / débit du tronçon de sortie est très proche de 1 et présente une valeur inférieure par rapport au rapport de débit obtenu sur une membrane classique, dont les résultats apparaissent dans le tableau de la **fig. 4**.

L'examen du rapport du débit du tronçon d'entrée **P**_{**4**} sur le débit du tronçon de sortie **P**_{**1**}, pour une membrane conforme à l'invention **(fig. 5)**, fait apparaître un débit légèrement supérieur pour le tronçon de sortie par rapport à celui du tronçon d'entrée (rapport inférieur à 1). De tels résultats montrent l'efficacité de la mise en oeuvre d'une couche de séparation présentant un gradient d'épaisseur diminuant selon le sens de circulation du fluide, dans la mesure où le débit du perméat est sensiblement identique tout le long de la membrane. La valeur inférieure à 1 du rapport du débit du tronçon d'entrée sur le débit du tronçon de sortie s'explique par la mise en oeuvre d'une couche de séparation **4** dont l'épaisseur est légèrement trop importante par rapport à la valeur de la pression exercée par le fluide. Le choix de la valeur du gradient d'épaisseur de la couche de séparation **4** est choisi de manière qu'en considération des paramètres de fonctionnement de la membrane, il puisse être obtenu, tout le long de la membrane, un débit de perméat constant ou sensiblement constant. En d'autres termes, la valeur du gradient d'épaisseur de la couche de séparation **4** est choisi en fonction de la valeur du gradient de la pression du fluide circulant à l'intérieur du canal, afin d'obtenir un débit de perméat constant tout le long de la membrane. Il doit être noté que le débit de perméat est considéré constant tout le long de la membrane si l'écart entre le débit de perméat maximum présenté par une section de la membrane et le débit minimum de perméat présenté par une autre section de la membrane varie de 20 %. Ainsi, le rapport du débit du perméat de la section présentant la plus forte valeur sur le débit du perméat présentant la plus faible valeur doit être compris entre 1 et 1,2.

L'examen de la **fig. 5** permet de constater que la valeur de la vitesse **V** de circulation du fluide à traiter modifie le rapport du débit de perméat entre, notamment, les tronçons d'entrée et de sortie. Aussi, il est à considérer que le gradient d'épaisseur est déterminé pour une valeur donnée de la vitesse de circulation du fluide. Dans l'exemple illustré, l'épaisseur de la couche de séparation **4** est particulièrement adaptée pour une vitesse de circulation du fluide égale à 5 m/s. Toutefois, il est à noter qu'une telle membrane conserve son efficacité même pour des valeurs différentes de vitesse de circulation du fluide à traiter.

L'examen de la **fig. 5** permet également de montrer, par comparaison entre la perméabilité de la couche de séparation **4** et le débit du tronçon, que la perméabilité du support poreux **2** est plus grande que celle de la couche séparatrice **4**. En effet, il est rappelé que de manière classique, un support poreux **2** doit, d'une part, assurer la résistance mécanique vis-à-vis de la pression de transfert et, d'autre part, posséder une perméabilité suffisamment élevée pour ne pas constituer un frein à la filtration.

## Revendications

1. Membrane pour la filtration tangentielle d'un fluide à traiter, ladite membrane comportant un support poreux rigide inorganique **(2)** délimitant au moins un canal de circulation **(3)** pour le fluide à traiter circulant dans un sens donné **(f),** la surface du canal **(3)** étant recouverte par au moins une couche de séparation **(4)** du fluide à traiter, en une fraction appelée perméat traversant la couche et le support,
**caractérisée en ce que** la couche de séparation **(4)** présente un gradient d'épaisseur **(****e****)** diminuant selon le sens de circulation **(f)** du fluide à traiter.

2. **Membrane** selon la revendication 1, **caractérisée en ce que** la couche de séparation **(4)** présente un gradient d'épaisseur diminuant sensiblement de manière continue selon le sens de circulation **(f)** de fluide à traiter.

3. Membrane selon la revendication 1, **caractérisée en ce que** la couche de séparation **(4)** présente un gradient d'épaisseur diminuant par paliers **(P**_{**i**}**)** selon le sens de circulation **(f)** du fluide à traiter.

4. Membrane selon la revendication 3, **caractérisé en ce que** les paliers **(P**_{**i**}**)** de la couche de séparation **(4)** présentent tous une longueur prise selon le sens de circulation **(f)** sensiblement identique.

5. Membrane selon l'une des revendications 1 à 4, **caractérisée en ce qu'**elle comporte au moins un canal **(3)** de forme cylindrique.

6. Membrane selon l'une des revendications 1 à 4, **caractérisée en ce qu'**elle comporte au moins un canal **(3)** de section droite transversale polygonale.

7. Procédé de réalisation d'une membrane pour filtration tangentielle d'un fluide à traiter, comportant un support poreux rigide inorganique **(2)** délimitant au moins un canal **(3)** de circulation pour le fluide à traiter circulant selon un sens donné **(f),**
**caractérisé en ce qu'**il consiste à recouvrir la surface du canal **(3)** par au moins une couche de séparation **(4)** du fluide à traiter, présentant un gradient d'épaisseur diminuant selon le sens de circulation du fluide à traiter.

8. Procédé selon la revendication 7, **caractérisé en ce qu'**il consiste à recouvrir la surface du canal **(3)** par une couche de séparation **(4)** présentant un gradient d'épaisseur diminuant sensiblement de manière continue selon le sens de circulation du fluide à traiter.

9. Procédé selon la revendication 8, **caractérisé en ce qu'**il consiste à choisir la valeur du gradient d'épaisseur de la couche de séparation **(4)** en fonction de la valeur du gradient de la pression du fluide à traiter circulant dans le canal, afin d'obtenir un débit de perméat constant tout le long de la membrane.

10. Procédé selon la revendication 7, **caractérisé en ce qu'**il consiste à recouvrir la surface du canal **(3)** par une couche de séparation **(4)** présentant un gradient d'épaisseur diminuant par paliers **(P**_{**i**}**)** selon le sens de circulation du fluide à traiter.

11. Procédé selon la revendication 10, **caractérisé en ce qu'**il consiste à recouvrir la surface du canal **(3)** par une couche de séparation **(4)** présentant un gradient d'épaisseur diminuant selon des paliers **(P**_{**i**}**)** présentant tous une largeur, prise selon le sens de circulation **(f),** sensiblement identique.

12. Procédé selon la revendication 11, **caractérisé en ce qu'**il consiste :
- à diviser la longueur de chaque canal **(3)** en une série de tronçons **(P**_{**i**}**)** de longueur sensiblement égale,
- et à recouvrir la surface de chaque canal **(3),** d'une couche de séparation **(4)** en effectuant autant de dépôts qu'il y a de tronçons, à partir de l'extrémité d'entrée du canal et en diminuant d'une longueur d'un tronçon pour chaque dépôt successif.

13. Procédé selon la revendication 9 ou 10, **caractérisé en ce qu'**il consiste à assurer le dépôt de la couche de séparation **(4)** sur le support poreux **(2)** :
- en disposant verticalement le support poreux **(2),**
- en remplissant chaque canal **(3)** par une suspension de dépôt de la couche de séparation,
- et en vidant chaque canal **(3)** progressivement, en vue d'obtenir un temps de séjour pour la suspension de dépôt, à l'intérieur du canal, qui augmente progressivement, afin d'obtenir une couche de séparation **(4)** présentant un gradient d'épaisseur diminuant selon le sens de circulation **(f)** du fluide, qui est considéré comme s'établissant de l'extrémité basse vers l'extrémité haute du support poreux **(2).**

## Patentansprüche

1. Verfahren zur Querstromfiltration eines zu behandelnden Fluids, wobei die Membran einen starren, anorganischen, porösen Träger (2) umfaßt, der wenigstens einen Zirkulationskanal (3) für das zu behandelnde Fluid begrenzt, das in einer vorgegebenen Richtung (f) zirkuliert, wobei die Oberfläche des Kanals (3) durch wenigstens eine Lage zum Trennen (4) des zu behandelnden Fluids in eine Permeat genannte Fraktion bedeckt ist, welche die Lage und den Träger durchquert.
**dadurch gekennzeichnet, daß** die Lage zur Trennung (4) einen Dickegradienten (e) aufweist, der sich gemäß der Zirkulationsrichtung (f) des zu behandelnden Fluids vermindert.

2. Membran nach Anspruch 1, **dadurch gekennzeichnet, daß** die Lage zur Trennung (4) einen Dickegradienten aufweist, der sich im Wesentlichen kontinuierlich gemäß der Zirkulationsrichtung (f) von zu behandelndem Fluid vermindert.

3. Membran nach Anspruch 1, **dadurch gekennzeichnet, daß** die Lage zur Trennung (4) einen Dickegradienten aufweist, der sich in Stufen (Pᵢ) gemäß der Zirkulationsrichtung (f) des zu behandelnden Fluids vermindert.

4. Membran nach Anspruch 3, **dadurch gekennzeichnet, daß** die Stufen (Pᵢ) der Lage zur Trennung (4) alle eine entlang der Zirkulationsrichtung (f) gemessene Länge aufweisen, die im Wesentlichen identisch ist.

5. Membran nach einem der Ansprüche 1 bis 4, **dadurch gekennzeichnet, daß** sie wenigstens einen Kanal (3) mit zylindrischer Form umfaßt.

6. Membran nach einem der Ansprüche 1 bis 4, **dadurch gekennzeichnet, daß** sie wenigstens einen Kanal (3) mit geradem Querschnitt aufweist, der polygonal ist.

7. Verfahren zur Ausführung einer Membran zur Querstromfiltration eines zu behandelnden Fluids, umfassend einen porösen, starren, anorganischen Träger (2), der wenigstens einen Kanal (3) zur Zirkulation für das zu behandelnde Fluid begrenzt, daß gemäß einer vorgegebenen Richtung (f) zirkuliert,
**dadurch gekennzeichnet, daß** es darin besteht, die Oberfläche des Kanals (3) durch wenigstens eine Lage zur Trennung (4) des zu behandelnden Fluids zu bedecken, welche einen Dickegradienten aufweist, der sich gemäß der Zirkulationsrichtung des zu behandelnden Fluids vermindert.

8. Verfahren nach Anspruch 7, **dadurch gekennzeichnet, daß** es darin besteht, die Oberfläche des Kanals (3) durch eine Lage zur Trennung (4) zu bedecken, die einen Dickegradienten aufweist, der sich im Wesentlichen kontinuierlich gemäß der Zirkulationsrichtung des zu behandelnden Fluids vermindert.

9. Verfahren nach Anspruch 8, **dadurch gekennzeichnet, daß** es darin besteht, den Wert des Dickegradienten der Lage zur Trennung (4) in Abhängigkeit des Wertes des Druckgradienten des zu behandelnden Fluids, daß in dem Kanal zirkuliert, zu wählen, um einen konstanten Permeatdurchsatz über die gesamte Membran hinweg zu erhalten.

10. Verfahren nach Anspruch 7, **dadurch gekennzeichnet, daß** es darin besteht, die Oberfläche des Kanals (3) durch eine Lage zur Trennung (4) zu bedecken, die einen Dickegradienten aufweist, der sich in Stufen (Pᵢ) gemäß der Zirkulationsrichtung des zu behandelnden Fluids vermindert.

11. Verfahren nach Anspruch 10, **dadurch gekennzeichnet, daß** es darin besteht, die Oberfläche des Kanals (3) durch eine Lage zur Trennung (4) zu bedecken, die einen Dickegradienten aufweist, der sich gemäß Stufen (Pᵢ) vermindert, welche alle eine gemäß der Zirkulationsrichtung (f) genommene Breite aufweisen, die im wesentlichen identisch ist.

12. Verfahren nach Anspruch 11, **dadurch gekennzeichnet, daß** es darin besteht:
die Länge jedes Kanals (3) in eine Reihe von Abschnitten (Pᵢ) mit im Wesentlichen gleicher Länge zu unterteilen, und
die Oberfläche jedes Kanals (3) mit einer Lage zur Trennung (4) zu bedecken, indem so viele Abscheidungen durchgeführt werden, wie es Abschnitte gibt, ausgehend vom Eingangsende des Kanals und unter Verminderung einer Länge eines Abschnitts für jede aufeinander folgende Abscheidung.

13. Verfahren nach Anspruch 9 oder 10, **dadurch gekennzeichnet, daß** es darin besteht, die Abscheidung der Lage zur Trennung (4) auf dem porösen Träger (2) sicherzustellen:
indem der poröse Träger (2) vertikal angeordnet wird, indem jeder Kanal (3) durch eine Suspension zur Abscheidung der Lage zur Trennung gefüllt wird, und
indem jeder Kanal (3) fortschreitend in Hinblick darauf geleert wird, eine Verweilzeit für die Abscheidungssuspension im Inneren des Kanals zu erhalten, die sich fortschreitend vergrößert, um eine Trennlage (4) zu erhalten, die einen Dickegradienten aufweist, der sich gemäß der Zirkulationsrichtung (f) des Fluids vermindert, welcher betrachtet wird als sich vom unteren Ende zum oberen Ende des porösen Trägers (2) etablierend.

## Claims

1. Membrane for tangential filtration of a fluid to be treated, said membrane including an inorganic stiff porous support (2) delimiting at least one flow channel (3) for the fluid to be treated flowing in a given direction (f), the surface of the channel (3) being covered with at least one layer (4) for separating the fluid to be treated, into a fraction called a permeating fraction passing through the layer and the support,
**characterized in that** the separation layer (4) has a thickness gradient (e) decreasing along the flow direction (f) of the fluid to be treated.

2. The membrane according to claim 1, **characterized in that** the separation layer (4) has a thickness gradient substantially decreasing continuously along the flow direction (f) of the fluid to be treated.

3. The membrane according to claim 1, **characterized in that** the separation layer (4) has a thickness gradient decreasing stepwise (Pᵢ) along the flow direction (f) of the fluid to be treated.

4. The membrane according to claim 3, **characterized in that** the steps (Pᵢ) of the separation layer (4) all have a substantially identical length taken along the flow direction (f).

5. The membrane according to any of claims 1 to 4, **characterized in that** it includes at least one channel (3) with a cylindrical shape.

6. The membrane according to any of claims 1 to 4, **characterized in that** it includes at least one channel (3) with a polygonal transverse cross-section.

7. A method for making a membrane for tangential filtration of a fluid to be treated, including an inorganic stiff porous support (2) delimiting at least one flow channel (3) for the fluid to be treated, flowing in a given direction (f),
**characterized in that** it consists of covering the surface of the channel (3) with at least one separation layer (4) of the fluid to be treated, having a thickness gradient decreasing along the flow direction of the fluid to be treated.

8. The method according to claim 7, **characterized in that** it consists of covering the surface of the channel (3) with a separation layer (4) having a thickness gradient substantially decreasing continuously along the flow direction of the fluid to be treated.

9. The method according to claim 8, **characterized in that** it consists of selecting the value of the thickness gradient of the separation layer (4) according to the value of the pressure gradient of the fluid to be treated, flowing in the channel, in order to obtain a constant permeating fraction flow rate all along the membrane.

10. The method according to claim 7, **characterized in that** it consists of covering the surface of the channel (3) with a separation layer (4) having a thickness gradient decreasing stepwise (Pᵢ) along the flow direction of the fluid to be treated.

11. The method according to claim 10, **characterized in that** it consists of covering the surface of the channel (3) with a separation layer (4) having a thickness gradient decreasing according to steps (Pᵢ), all having a substantially identical width, taken along the flow direction (f).

12. The method according to claim 11, **characterized in that** it consists of:
- dividing the length of each channel (3) into a series of sections (Pᵢ) with substantially equal length,
- and covering the surface of each channel (3), with a separation layer (4) by performing as many deposits as there are sections, from the inlet end of the channel and with reduction by one length of a section for each successive deposit.

13. The method according to claim 9 or 10, **characterized in that** it consists of providing the deposit of the separation layer (4) on the porous support (2):
- by positioning the porous support (2) vertically,
- by filling each channel (3) with a suspension for depositing the separation layer,
- and by gradually emptying each channel (3) in order to obtain a residence time for the deposit suspension, inside the channel, which gradually increases, in order to obtain a separation layer (4) having a thickness gradient decreasing along the flow direction (f) of the fluid, which is considered as being established from the low end to the high end of the porous support (2).
